(19) Europäisches Patentamt
European Patent Office
Office européen des brevets

(11) Numéro de publication: **0 113 284**
**B1**

# (12) FASCICULE DE BREVET EUROPEEN

(45) Date de publication du fascicule du brevet: **07.01.88**

(51) Int. Cl.[4]: **C 10 G 65/12**, C 10 G 45/04

(21) Numéro de dépôt: **83402495.2**

(22) Date de dépôt: **21.12.83**

(54) **Procédé de traitement d'une huile lourde ou d'une fraction d'huile lourde pour les convertir en fractions plus légères.**

(30) Priorité: **30.12.82 FR 8222210**

(43) Date de publication de la demande: **11.07.84 Bulletin 84/28**

(45) Mention de la délivrance du brevet: **07.01.88 Bulletin 88/1**

(84) Etats contractants désignés: **BE DE GB IT NL SE**

(56) Documents cités:
**EP - A - 0 055 164**
**DE - A - 3 020 518**
**FR - A - 2 268 860**
**FR - A - 2 277 140**
**FR - A - 2 508 898**
**FR - A - 2 516 932**
**FR - A - 2 528 721**
**US - A - 3 730 875**

(73) Titulaire: **INSTITUT FRANCAIS DU PETROLE, 4, Avenue de Bois-Préau, F-92502 Rueil-Malmaison (FR)**

(72) Inventeur: **Billon, Alain, Le Benneton, F-69530 Orlienas (FR)**
Inventeur: **Jacquin, Yves, 36, Rue des Fontaines, F-92310 Sevres (FR)**
Inventeur: **Peries, Jean-Pierre, Monteclare, Route de Givors, F-69440 Mornant (FR)**
Inventeur: **Toulhoat, Hervé, 8, rue de Seine, F-78230 Le Pecq (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 113 284 B1

ACTORUM AG

## Description

L'invention concerne le traitement de pétroles lourds ou de fractions lourdes de pétrole, à forte teneur en asphaltènes, dans le but de les convertir en fractions moins lourdes, plus aisément transportables ou traitables par les procédés usuels de raffinage. Les huiles d'hydrogénation du charbon peuvent aussi être traitées.

Plus particulièrement, l'invention résoud le problème de la transformation d'une huile lourde visqueuse, non transportable, riche en métaux, soufre et asphaltènes, et contenant plus de 50% de constituants de point d'ébullition normal supérieur à 520 °C, en un produit hydrocarboné stable, aisément transportable, de faible teneur en métaux, soufre et asphaltènes et n'ayant qu'une teneur réduite, par exemple moins de 20% en poids, de constituants de point d'ébullition normal supérieur à 520 °C.

Le problème résolu par l'invention a longtemps fait l'objet de travaux; la principale difficulté à vaincre est celle de la désactivation des catalyseurs par les impuretés, notamment les impuretés métalliques, des charges traitées. C'est ainsi, par exemple, qu'un pétrole brut de Boscan ou de Cerro Negro peut renfermer de 200 à 1 000 ppm en poids, ou plus, de métaux; ces métaux sont principalement le vanadium et le nickel, avec des proportions variables de fer et d'autres métaux.

La désactivation des catalyseurs d'hydrotraitement est illustrée par le brevet US 4.017.380 qui propose de remédier à cette difficulté par emploi d'un procédé cyclique; une unité d'hydrodésulfuration (HDS) catalytique (I) précède une unité de visbreaking (II) contenant un catalyseur d'HDS désactivé; dès que le catalyseur d'hydrodésulfuration actif (I) est désactivé, on inverse les opérations après avoir pris soin de remplacer le catalyseur (II) par du catalyseur frais: la charge passe alors sur le catalyseur actif d'HDS (II), dans des conditions d'HDS, puis sur le catalyseur inactif (I), dans des conditions d'hydrovisbreaking.

US-A-3.730.875 décrit un procédé de conversion de charges hydrocarbonées asphalténiques contenant du soufre et des métaux qui comprend les trois étapes successives suivantes:

a) une hydrogénation catalytique;

b) un hydrocraquage thermique non catalytique,

c) un hydrocraquage catalytique d'au moins une partie du produit de l'étape (b), dont l'une des fonctions principales est de désulfurer l'effluent provenant de l'étape (b) (colonne 4, lignes 8 à 11).

Selon l'enseignement très clair de ce document, pour que le procédé décrit soit performant il est indispensable que le catalyseur de l'étape (a) soit un catalyseur qui n'adsorbe pas les asphaltènes et les métaux (colonne 3, lignes 19 à 21). Dans la forme de réalisation illustrée dans ce brevet seule une fraction des produits issus de l'étage (b), débarrassée des asphaltènes et des métaux, est introduite dans l'étape (c) (colonne 3, lignes 58 à 60).

EP-A-55.164 concerne des agglomérés d'alumine de caractéristiques particulières et une méthode de préparation de ces agglomérés. Ce document révèle de plus que ces agglomérés peuvent être utilisés comme support pour la fabrication de catalyseurs utilisables dans un très grand nombre de réactions. Parmi les réactions pour lesquelles ce support peut être utilisé on trouve les hydrotraitements de produits pétroliers (page 11, lignes 21 à 32).

Les supports préparés selon le procédé décrit dans ce document peuvent être microporeux, macroporeux ou être de type bimodaux, c'est-à-dire, comportant des micropores et des macropores. La majorité des supports décrits dans les exemples sont de type bimodaux comportant à la fois des macropores et des micropores.

FR-A-2.277.140 concerne un procédé de fabrication de fuels et de distillats moyens pauvre en soufre, à partir de résidus de la distillation du pétrole, riches en asphalte et en métaux, comprenant une première étape d'hydrocraquage thermique, non catalytique, à l'issue de laquelle les produits obtenus sont séparés en une première fraction contenant essentiellement les asphaltes et les composés métalliques et en une seconde fraction sensiblement exempte de ces substances, ladite seconde fraction étant alors envoyée dans la deuxième étape du procédé, dans laquelle elle est soumise à une désulfuration hydrogénante en présence d'un catalyseur.

Il y a donc place sur le marché pour un procédé réellement continu, dans lequel le catalyseur d'hydrotraitement peut être utilisé pendant plusieurs semaines ou plusieurs mois sans désactivation.

Le procédé de la présente invention comprend les étapes essentielles suivantes:

a) dans une première étape, on soumet la charge lourde d'hydrocarbures, mélangée à de l'hydrogène, à des conditions d'hydroviscoréduction,

b) dans une seconde, on fait passer le produit de l'étape (a), mélangé à de l'hydrogène, dans des conditions d'hydrodémétallation, sur un catalyseur renfermant de l'alumine et au moins un métal ou composé de métal de l'un au moins des groupes V, VI et VIII (groupe du fer), ledit catalyseur étant constitué d'agglomérats juxtaposés formés chacun d'une pluralité de plaquettes aciculaires, les plaquettes de chaque aggloméral étant orientées généralement radialement les unes par rapport aux autres et par rapport au centre de l'aggloméral, ledit catalyseur contenant une proportion majeure de mésopores en forme de coins, et présentant une surface spécifique comprise entre 50 et 250 $m^2/g$, un volume poreux total compris entre 0, et 2,0 $cm^3/g$ et la répartition poreuse suivante:

– % du volume poreux total en pores de diamètre moyen inférieur à 10 nanomètres: 0–10

– % du volume poreux total en pores de diamètre moyen compris entre 10 et 100 nanomètres: 40–90

– % du volume poreux total en pores de diamètre moyen compris entre 100 et 500 nanomètres: 5–60

– % du volume poreux total en pores de diamètre moyen compris entre 500 et 1000 nanomètres: 5–60

– % du volume poreux total en pores de diamètre moyen supérieur à 1000 nanomètres: 5–20.

c) dans une troisième étape, on traite le produit de l'étape (b) par l'hydrogène, au contact d'un catalyseur renfermant de l'alumine et au moins un métal ou composé de métal choisi dans le groupe qui comprend le molybdène, le tungstène, le nickel, le cobalt et le fer.

Selon une variante préférée, l'étape (c) est mise en œuvre en deux étapes successives:

– d'abord au contact d'un catalyseur ($C_1$) contenant de l'alumine, au moins un composé de molybdène et/ou tungstène et au moins un composé de nickel et/ou cobalt, le rapport pondéral des métaux

$$\frac{Ni+Co}{W+Mo}$$

(l'un des métaux au numérateur ou au dénominateur pouvant être absent).

étant fixé entre 0,8:1 et 3:1 et de préférence entre 1:1 et 2:1;

– puis au contact d'un catalyseur (C2) contenant de l'alumine, au moins un composé de molybdène et/ou tungstène et au moins un composé de nickel et/ou cobalt, le rapport pondéral des métaux

$$\frac{Ni+Co}{W+Mo}$$

(l'un des métaux au numérateur ou au dénominateur pouvant être absent).

étant compris entre 0,2:1 et 0,5:1, de préférence entre 0,25:1 et 0,35:1.

Le rapport en poids du catalyseur C2 au catalyseur C1 est de préférence de 1:1 à 9:1.

Le catalyseur de l'étape (b) a été décrit dans la demande de brevet français 82 10.757 du 17 juin 1982 publiée sous le numéro 2.528.721 dont la description est incorporée ici par voie de référence. Les informations essentielles sont reprises ci-aprés:

En règle générale, une large proportion, le plus souvent au moins 50% des plaquettes aciculaires, ont une dimension suivant leur axe de plus grand développement comprise entre 0,05 et 5 micromètres et de préférence entre 0,1 et 2 micromètres, un rapport de cette dimension à leur largeur moyenne compris entre 2 et 20, et de préférence entre 5 et 15, un rapport de cette dimension à leur épaisseur moyenne compris entre 1 et 5000, et de préférence entre 10 et 200. Une large proportion, le plus souvent au moins 50% des agglomérats de plaquettes aciculaires constituent une collection de particules pseudo-sphériques de taille moyenne comprise entre 1 et 20 micromètres, de préférence entre 2 et 10 micromètres. Des images très adéquates pour représenter une telle structure sont par exemple un tas de bogues épineuses de chataîgnes, ou encore un tas d'oursins de mer.

La figure 1 permet de comparer la courbe de répartition poreuse d'un catalyseur (A) tel qu'utilisé à l'étape (b) de l'invention et celles correspondant à des catalyseurs monomodaux (C) ou bimodaux (B) réalisés selon l'art antérieur.

Le catalyseur utilisé dans l'invention a de préférence un volume poreux total de 0,90 à 1,30 $cm^3/g$ et une surface spécifique comprise entre 120 et 180 $m^2/g$.

La technique de microscopie électronique à balayage permet de caractériser sans ambiguité par des microphotographies un catalyseur possédant la structure ci-dessus. Les figures 2 à 5 présentent quatre microphotographies aux grossissements 300 fois, 3 000 fois, 10 000 fois et 20 000 fois respectivement d'un catalyseur utilisé selon l'invention (catalyseur A) qui illustrent bien la structure particulière en oursins juxtaposés que l'on vient de décrire.

La figure 6 présente une microphotographie au grossissement nominal 110 000 fois d'un faisceau de plaquettes aciculaires du catalyseur A, qui illustre bien l'allure typique de ces plaquettes. Les intervalles entre les flèches opposées marquées 1 repèrent la trace de plaquettes sur champ et sont une mesure approximative de l'épaisseur de ces plaquettes. L'intervalle entre les flèches opposées marquées 2 repère une plaquette parallèle au plan de la photographie et est une mesure de la largeur moyenne de cette plaquette. Sur la figure 6, l'échelle est de 9 nanomètres pour un millimètre et les parties foncées correspondent à la matière catalytique.

En revanche, les figures 7 à 10 présentent quatre microphotographies prises aux mêmes grossissements respectifs que les figures 2 à 5 et avec le même appareil, sur un échantillon de catalyseur (catalyseur B) préparé en utilisant des billes d'alumine bimodales obtenues par le procédé breveté en France sous le numéro 2 449 474: ces photographies illustrent bien la description qui est donnée dans ce dernier brevet, à savoir que la macroporosité résulte des vides interparticulaires existant entre des particules microporeuses sphéroïdales, dont la répartition granulométrique et la compacité de l'empilement déterminent le volume macroporeux et la taille des macropores. Sur les photographies des figures 2 à 5 et 7 à 10, les plages foncées correspondent aux espaces vides des structures des catalyseurs, c'est-à-dire à la macroporosité, tandis que les parties claires correspondent à la matière catalytique. La répartition des diamètres des macropores du catalyseur B peut être mesurée sur les photographies et elle correspond bien à celle que l'on obtient par porosimétrie au mercure et qui est représentée figure 1. La comparaison des microphotographies fait bien apparaître que les particules sphéroïdales microporeuses du catalyseur B n'ont pas la structure en oursin obtenue pour le catalyseur A utilisé dans l'étape (b) de l'invention.

Les catalyseurs utilisés dans l'étape (b) du présent procédé ont une excellente résistance au

colmatage des bouches de pores; ce résultat peut être expliqué comme suit:

– Les pores présents dans ces catalyseurs, constitués en majorité par les espaces libres situés entre les plaquettes aciculaires rayonnantes, sont des pores «en coins» et donc de diamètre continument variable.

– Ces pores rayonnants ne sont pas nécessairement linéaires en direction.

– Ces pores rayonnants ne sont pas des canaux d'accès à des micropores de diamètres inférieurs à 10 nanomètres, comme dans les catalyseurs conus, mais ils constituent eux-mêmes une mésoporosité offrant une surface catalytiquement active.

Un catalyseur utilisable pour l'étape (b) de l'invention peut être préparé suivant la méthode suivante, sans limiter l'invention à cette méthode particulière de préparation:

On utilise comme support des agglomérés d'alumine en particules de l'ordre de 0,1 à 10 millimètres ou en poudre en particules de l'ordre de 20 à 100 micromètres ayant eux-mêmes la structure en oursin précitée et répondant sensiblement aux mêmes caractéristiques que celles du catalyseur de l'invention, notamment en ce qui concerne les formes et les dimensions des plaquettes et des agglomérats, la surface spécifique et la porosité.

Sur ces agglomérés, on dépose, par toute méthode connue, le ou les métaux catalytiques, à savoir au moins un métal ou composé de métal appartenant à l'un au moins des groupes V, VI et VIII (groupe du fer) de la classification périodique, plus particulièrement l'un au moins des métaux suivants: molybdène, tungstène, fer, vanadium, cobalt et nickel. Des associations préférées sont molybdène + cobalt, molybdène + nickel, vanadium + nickel, tungstène + nickel.

Les métaux précités sont le plus souvent introduits sous forme de précurseurs tels que oxydes, acides, sels, complexes organiques, et en quantités telles que le catalyseur renferme de 0,5 à 40% et de préférence de 1 à 20% en poids de ces métaux exprimés en oxydes. Ces précurseurs sont bien connus et il est donc inutile d'en donner une liste ici. On termine par un séchage éventuel et un traitement thermique à une température comprise entre 400 et 800 degrés centigrades.

Pour préparer les agglomérés d'alumine, on peut partir d'alumine ou d'alumine renfermant d'autres éléments, par exemple du sodium, des terres rares ou de la silice. On préfère une alumine renfermant de 100 à 1000 parties par million en poids de silice. On opère de préférence comme suit:

a) On traite des agglomérés d'alumine dans un milieu aqueux constitué d'un mélange d'au moins un acide permettant de dissoudre au moins une partie de l'alumine des agglomérés et d'au moins un composé apportant un anion capable de se combiner avec les ions aluminium en solution, ce dernier composé étant un individu chimique distinct de l'acide précité.

b) On soumet simultanément ou subséquemment les agglomérés ainsi traités à un traitement à une température comprise entre environ 80 degrés C et environ 250 degrés C pendant une période comprise entre environ quelques minutes et environ 36 heures.

c) On sèche éventuellement les agglomérés et on les soumet à une activation thermique à une température comprise entre environ 500 °C et environ 1 100 °C.

Les agglomérés d'alumine active mis en œuvre selon la présente invention peuvent être préparés à partir d'une poudre d'alumine active présentant une structure mal cristallisée et/ou amorphe, par exemple obtenue selon le procédé décrit dans le brevet français n° 1 438 497.

L'alumine active mise en œuvre est généralement obtenue par déshydratation rapide des hydroxydes d'aluminium tels que la bayerite, l'hydrargillite ou gibbsite, la nordstrandite ou les oxyhydroxydes d'aluminium tels que la boehmite et le diaspore.

L'agglomération de l'alumine active est réalisée selon les méthodes bien connues de l'homme de l'art et, en particulier, par pastillage, extrusion, mise en forme de billes au drageoir tournant, etc.

D'une manière préférée, cette agglomération est effectuée, ainsi qu'il est bien connu de l'homme de l'art, en ajoutant des agents porogènes au mélange à agglomérer. Les agents porogènes que l'on peut utiliser sont notamment la farine de bois, le charbon de bois, la cellulose, les amidons, le naphtalène, et, d'une manière générale, tous les composés organiques susceptibles d'être éliminés par calcination.

On opère ensuite, le cas échéant, le mûrissement, le séchage et/ou la calcination des agglomérés.

Les agglomérés d'alumine active obtenus présentent généralement les caractéristiques suivantes: leur perte au feu mesurée par calcination à 1 000 °C est comprise entre environ 1 et environ 15%, leur surface spécifique est comprise entre environ 100 et environ 350 $m^2/g$, leur voulume poreux total est compris entre environ 0,45 et environ 1,5 $cm^3/g$.

Les agglomérés d'alumine active sont ensuite traités dans un milieu aqueux constitué d'un mélange d'au moins un acide permettant de dissoudre au moins une partie de l'alumine des agglomérés et d'au moins un composé apportant un anion capable de se combiner avec les ions aluminium en solution.

Au sens de l'invention, on entend par acide permettant de dissoudre au moins une partie de l'alumine des agglomérés tout acide qui, mis en contact avec les agglomérés d'alumine active définis ci-dessus, réalise la mise en solution d'au moins une partie des ions aluminium. L'acide doit dissoudre au moins 0,5% et au plus 15% en poids d'alumine des agglomérés. Sa concentration dans le milieu aqueux de traitement doit être inférieure à 20% en poids et de préférence comprise entre 1% et 15%.

On utilisera de préférence les acides forts tels que l'acide nitrique, l'acide chlorhydrique, l'acide perchlorique, l'acide sulfurique ou des acides faibles mis en œuvre à une concentration telle que leur solution aqueuse présente un pH inférieur à envirion 4.

Au sens de l'invention, on entend par composé apportant un anion capable de se combiner avec les ions aluminium en solution, tout composé capable de libérer en solution un anion A(–n) susceptible de former avec les cations Al(3+) des produits dans lesquels le rapport atomique n(A/Al) est inférieur ou égal à 3. Un cas particulier de ces composés peut être illustré par les sels basiques de formule générale Al2(OH) xAy dans laquelle $0 < x < 6$; $ny < 6$; n représente le nombre de charges de l'anion A.

La concentration de ce composé dans le milieu aqueux de traitement doit être inférieure à 50% en poids et de préférence comprise entre 3% et 30%.

On utilise de préférence les composés capables de libérer en solution les anions choisis parmi le groupe constitué par les anions nitrate, chlorure, sulfate, perchlorate, chloroacétate, dichloracétate, trichloracétate, bromoacétate, dibromacétate, et les anions de formule générale:

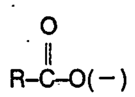

dans laquelle R représente un radical pris dans le groupe comprenant H, $CH_3$, $C_2H_5$, $CH_3CH_2CH_2$, $(CH_3)_2CH$.

Les composés capables de libérer en solution l'anion A(–n) peuvent opérer cette libération, soit directement par exemple par dissociation, soit indirectement par exemple par hydrolyse. Les composés peuvent notamment être choisis parmi le groupe comportant: les acides minéraux ou organiques, les anhydrides, les sels organiques ou minéraux, les esters. Parmi les sels minéraux, on peut citer les sels alcalins ou alcalino-terreux solubles en milieu aqueux, comme ceux du sodium, de potassium, de magnésium ou de calcium, les sels d'ammonium, les sels d'aluminium, les sels de terres rares.

Ce traitement peut être effectué soit par imprégnation à sec des agglomérés, soit par immersion des agglomérés dans la solution aqueuse constituée du mélange précité d'acide et de composé apportant l'anion désiré. Par imprégnation à sec, on entend mise en contact des agglomérés d'alumine avec un volume de solution inférieur ou égal au volume poreux total des agglomérés traités.

Selon un mode particulièrement préféré de mise en œuvre de l'invention, on utilisera comme milieu aqueux des mélanges d'acide nitrique et acétique ou d'acide nitrique et formique.

On soumet simultanément ou subséquemment les agglomérés ainsi traités à un traitement à une température comprise entre environ 80 et environ 250 °C pendant une période de temps comprise entre environ 5 minutes et environ 36 heures.

Ce traitement hydrothermique n'entraîne aucune perte d'alumine.

On opère de préférence à une température comprise entre 120 et 220 °C pendant une période de temps comprise entre 15 minutes et 18 heures.

Ce traitement constitue un traitement hydrothermal des agglomérés d'alumine active qui réalise la transformation d'au moins une partie de ceux-ci en boehmite. Ce traitement hydrothermal peut être réalisé soit sous pression de vapeur saturante, soit sous une pression partielle de vapeur d'eau au moins égale à 70% de la pression de vapeur saturante correspondant à la température de traitement.

Sans limiter la présente invention à la théorie, on peut penser que l'association d'un acide qui permet la dissolution d'au moins une partie de l'alumine et d'un anion qui permet la formation des produits décrits ci-dessus lors du traitement hydrothermal entraîne l'obtention d'une boehmite particulière, précurseur des plaquettes aciculaires de l'invention, dont la croissance procède radialement à partir de germes de cristallisation.

De plus, la concentration de l'acide et du composé dans le mélange de traitement et les conditions de traitement hydrothermal mises en œuvre sont telles qu'il n'y a pas de perte d'alumine. L'augmentation de la porosité à la suite du traitement est donc due à une expansion des agglomérés au cours du traitement et non à une perte d'alumine.

Les agglomérés ainsi traités sont ensuite éventuellement séchés à une température généralement comprise entre environ 100 et 200 °C pendant une période de temps suffisante pour enlever l'eau qui n'est pas chimiquement liée. Les agglomérés sont ensuite soumis à une activation thermique à une température comprise entre environ 500 °C et environ 1 100 °C pendant une période comprise entre environ 15 minutes et 24 heures.

Les opérations d'activation peuvent se faire en plusieurs étapes. On opérera de préférence une activation à une température comprise entre environ 550 °C et 950 °C.

Les agglomérés d'alumine active résultants présentent les caractéristiques suivantes:

Une densité de remplissage tassé comprise entre environ 0,36 et 0,75 g/cm$^3$.

Un volume poreux total (VPT) compris entre 0,7 et environ 2,0 cm$^3$/g.

Une répartition des volumes poreux suivant la taille des pores conforme aux valeurs énoncées plus haut, concernant le catalyseur utilisé dans la deuxième étape du procédé de l'invention, au facteur correctif près traduisant l'alourdissement dû au dépôt des métaux.

Une surface spécifique mesurée par la méthode B.E.T. comprise entre environ 80 et environ 250 m$^2$/g.

Une solidité mécanique comprise entre 2 et environ 20 kg, mesurée par la méthode d'écrasement grain par grain.

Le procédé précité de préparation d'agglomérés d'alumine permet notamment et de façon totalement inattendue de modifier la répartition des volumes poreux suivant la taille des pores des agglomérés non traités. Il permet notamment d'augmenter la proportion des pores compris entre 10 et 100 nanomètres, de réduire la proportion des pores inférieurs à 10 nanomètres et de diminuer la proportion des pores supérieurs à 500 nanomètres en modifiant peu la proportion des pores compris entre 100 et 500 nanomètres.

Les agglomérés d'alumine ainsi obtenus peuvent avoir été thermiquement stabilisés par les terres rares, la silice ou les métaux alcalino-terreux.

En ce qui concerne l'étape (c) du procédé, il a été précisé ci-dessus que l'on opérait préférentiellement en utilisant deux lits successifs de catalyseurs, nommés plus haut ($C_1$) et ($C_2$).

Le support du catalyseur ($C_1$) est constitué de préférence par une alumine de faible acidité, c'est-à-dire présentant une chaleur de neutralisation par adsorption d'ammoniac à 320 °C inférieure à 40 joules (et préférentiellement inférieure à 30 joules) par gramme d'alumine, sous une pression d'ammoniac de 0,4 bars. Ce support d'alumine présente une surface de 50 à 300 $m^2$/g et, de préférence, de 40 à 150 $m^2$/g, ainsi qu'un volume poreux généralement compris entre 0,4 et 1,3 $cm^3$/g. On peut citer comme exemple de ce type de support les alumines ayant subi un autoclavage sous pression de vapeur d'eau.

Le catalyseur ($C_2$) utilisé dans le deuxième lit catalytique sera de préférence incorporé sur un support présentant un caractère plus acide que le support du catalyseur ($C_1$): son acidité, déterminée comme ci-dessus par adsorption d'ammoniac, sera préférentiellement supérieure à 30 joules/g. Sa surface est de préférence comprise entre 150 et 350 $m^2$/g, et son volume poreux de préférence compris entre 0,4 et 1 $cm^3$/g. On peut citer comme supports répondant à ces caractéristiques de l'alumine $\gamma$ ex boehmite ou $\eta$ ex bayerite, ou encore des supports de type alumine/magnésie ou silice/magnésie contenant environ de 5 à 10% en poids de magnésie.

Les techniques d'incorporation des métaux actifs (par exemple Mo, W, Ni, Co, Fe) présents aux étapes (b) et (c) du procédé sont conventionnelles. Ces catalyseurs fonctionnent principalement, en cours d'opération, sous forme sulfurée; leur sulfuration peut être préalable au traitement de la charge ou résulter du passage de cette dernière.

– L'étape (a) est mise en œuvre en présence d'hydrogène dans un espace de réaction vide ou contenant un matériau relativement inerte, à une température comprise entre 420 et 500 °C sous une pression de 40 à 200 bars, le temps de séjour de la charge étant d'environ 10 s à 15 min, et la quantité d'hydrogène généralement comprise entre 300 et 3 000 $Nm^3/m^3$.

– L'étape (b) est mise en œuvre à une température généralement comprise entre 350 et 425 °C, sous une pression de 40 à 200 bars, en utilisant un débit horaire de charge liquide de 0,2 à 2 $m^3/m^3/h$, la quantité d'hydrogène étant habituellement de 300 à 3 000 $Nm^3/m^3$.

– L'étape (c) est mise en œuvre entre 300 et 425 °C, sous une pression de 30 à 200 bars, la quantité d'hydrogène étant habituellement de 500 à 3 000 $Nm/m^3$, et le débit horaire de charge liquide étant de 0,2 à 2 $m^3/m^3/h$.

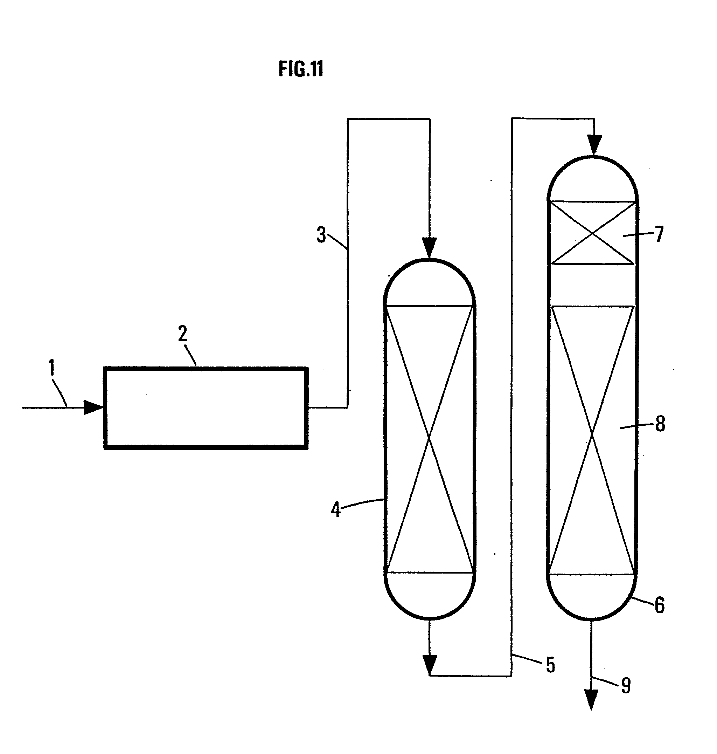

L'invention est illustrée par la figure 11.

Un mélange d'huile lourde asphalténique et d'hydrogène est envoyé par la ligne 1 à un four d'hydroviscoréduction 2 puis par la ligne 3 au réacteur d'hydrodémétallation catalytique 4. L'effluent est envoyé par la ligne 5 au réacteur 6 qui contient un premier lit de catalyseur 7 et un second lit de catalyseur 8. Le produit final est soutiré par la ligne 9.

Ce schéma peut subir d'importants changements. Par exemple la circulation des réactifs peut se faire de bas en haut dans l'un des réacteurs 4 et 6 ou dans ces deux réacteurs. Les catalyseurs peuvent être en lit fixe, mobile ou expansé. Des appoints d'hydrogène peuvent être prévus entre chaque appareil. On peut aussi, bien que ce soit moins désirable, fractionner les produits à la sortie des appareils 2 et/ou 4 pour n'envoyer qu'une partie de ces produits dans l'appareil suivant (4 et/ou 6). La distillation finale des produits du procédé n'a pas été représentée; elle n'est habituellement pas nécessaire ou peut se faire au point d'arrivée de l'huile d'hydrocarbures si celle-ci est envoyée, par la ligne 9, dans un oléoduc, un navire de transport ou autre moyen de transport.

Les charges qui peuvent être traitées selon l'invention sont, par exemple, les pétroles bruts, les résidus sous vide, les résidus atmosphériques, les huiles de schistes ou de sables bitumineux, les asphaltes ou les huiles de liquéfaction du charbon. Les huiles ont le plus souvent une densité supérieure à: ($d_4^{15}$) 0,965, un degré API inférieur à 15,1, une teneur en asphaltènes (déterminée avec le n-heptane) supérieure à 5% en poids, une teneur en métaux (Ni + V) supérieure à 200 ppm en poids et une viscosité supérieure à 50 cSt (50 $mm^2$/s) à 100 °C.

Exemple

On traite un brut de Cerro Negro présentant les caractéristiques suivantes:

$d_4^{15}$ = 1,007

°API = 9

Métaux (Ni + V) = 500 ppm en poids

Asphaltènes (extraits à l'heptane) = 10,5% en poids

Soufre = 3,7% en poids

% distillant au-dessus de 520 °C = 58% en poids

viscosité = 249 cSt (249 $mm^2$/s) à 100 °C.

On soumet ce brut, additionné d'hydrogène, à une hydroviscoréduction. Les conditions sont les suivantes:

– pression: 150 bars
– température: 460 °C dans le four
  450 °C dans la chambre de maturation
– temps de résidence: 10 s dans le four
  8 min dans la chambre de maturation

– quantité d'$H_2$ par rapport à la charge: 800 $Nm^3/m^3$.

On fait passer l'effluent, additionné d'hydrogène, sur un catalyseur (A) renfermant, en poids:

$Al_2O_3$ en agglomérats de plaquettes aciculaires: 91,5%
$MoO_3$: 7 %
NiO: 1,5%

Les figures 2 à 5 présentent des microphotographies du catalyseur A effectuées au moyen d'un microscope électronique à balayage de marque JEOL, modèle JSM 35 CF, aux grandissements respectifs 300, 3 000, 10 000 et 20 000. Les échelles indiquées sur chaque photographie permettent de mesurer les dimensions des détails observables. Les parties sombres correspondent à la porosité, tandis que les parties claires correspondent à la matière catalytique. On peut voir que le catalyseur A possède bien la structure «en oursin» selon l'invention, à savoir une juxtaposition d'agglomérats ayant en majorité une dimension moyenne de 3,5 micromètres, chaque aggloméré étant formé de plaquettes allongées aciculaires, assemblées généralement radialement par rapport au centre des agglomérats. Les dimensions des plaquettes aciculaires sont mesurables en particulier sur la figure 6, qui est une microphotographie prise au grossissement nominal 110 000 avec un microscope électronique à transmission à balayage (S.T.E.M. VG HB5). Les plages sombres correspondent cette fois à la matière catalytique. L'échelle de cette microphotographie est de 9 nanomètres pour un millimètre. Les intervalles délimités par des flèches opposées repérées 1 et 2 correspondent respectivement aux traces de plaquettes aciculaires disposées perpendiculairement et parallèlement au plan de l'image. Les intervalles 1 donnent donc une mesure approximative de l'épaisseur des plaquettes et l'intervalle 2 une mesure de largeur de plaquette, soit respectivement environ 2 à 4 nanomètres et 60 nanométres, les plaquettes de la figure 6 ont une longueur de l'ordre de 0,5 à 1 micromètre, ce qui est en accord avec les longueurs mesurables sur la figure 5 où l'on voit ces plaquettes disposées dans les agglomérats. Le rapport de la longueur moyenne à la largeur moyenne est donc d'environ 8 à 16 et le rapport de la longueur moyenne à l'épaisseur moyenne est d'environ 120 à 480.

La figure 1 présente notamment la courbe de répartition poreuse cumulée du catalyseur A. Le diamètre des pores (D), exprimé en nanomètres, figure en abscisses et le volume poreux cumulé (V), exprimé en $cm^3/g$, en ordonnées. On peut constater que la répartition est conforme à la définition de l'invention et en particulier qu'elle ne possède pas de point d'inflexion intermédiaire bien marqué.

Le passage de la charge et de l'hydrogène sur le catalyseur (A) présulfuré se fait dans les conditions suivantes:

– température: 380 à 410 °C
– pression: 150 bars
– débit horaire de charge liquide: 0,5 $m^3/m^3/h$
– quantité d'$H_2$: 800 $Nm^3/m^3$ de charge.

L'effluent est envoyé, avec de l'hydrogène, dans un réacteur comprenant deux lits successifs de catalyseur:

Le premier lit représente 20% en poids de la somme des deux catalyseurs utilisés; il est constitué par du nickel et du molybdène dans un rapport pondéral $\frac{Ni}{Mo} = 1{,}68$. Le support de ce catalyseur est une alumine de faible acidité, présentant une chaleur de neutralisation par absorption de $NH_3$ de 20 joules/g; sa surface spécifique est de 140 $m^2/g$, son volume poreux étant de 0,48 $cm^3/g$. Ce catalyseur est un catalyseur commercial vendu par la Société française PROCATALYSE sous la dénomination LD 145.

Le deuxième lit représente 80% en poids de la somme des catalyseurs utilisés; il est constitué par du cobalt et du molybdène dans un rapport pondéral $\frac{Co}{Mo} = 0{,}25$. Son support est du type alumine $\gamma$, présentant une surface spécifique de 210 $m^2/g$, le volume poreux étant de 0,52 $cm^3/g$; ce support présente une chaleur de neutralisation par adsorption de $NH_3$ de 40 joules/g. Ce catalyseur est un catalyseur commercial vendu par la Société française PROCATALYSE sous la dénomination HR 306.

Le rapport pondéral de catalyseur du 2ème lit au 1er lit est donc de 4. La température est comprise, dans le réacteur, entre 370 et 400 °C, la pression étant de 140 bars. Le débit horaire de charge liquide est de 0,5 $m^3/m^3/h$, la quantité d'hydrogène par rapport à la charge est de 1 200 $Nm^3/m^3$.

Le produit liquide final obtenu après ces opérations présente les caractéristiques suivantes:

$d_4^{15} = 0{,}880$
°API = 29,3

Teneur en métaux (Ni + V) < 5 ppm en poids
Teneur en asphaltènes (extraits à l'heptane): 1,0% en poids
Teneur en soufre: 0,2% en poids
% distillant au-dessus de 520 °C = 12% en poids
Viscosité: 2,5 cSt (2,5 $mm^2/s$) à 100 °C
30 cSt (30 $mm^2/s$) à 20 °C

Rendement pondéral de l'effluent liquide par rapport au brut d'origine: 94%.

Le procédé a donc permis de transformer un brut lourd, visqueux, non transportable, à forte teneur en impuretés, en un brut synthétique stable, aisément transportable, à faible teneur en impuretés.

La durée de vie des catalyseurs est remarquable, compte tenu de la charge. En effet, le pouvoir de rétention de ces catalyseurs se situe au-delà de 100 g de métaux fixés pour 100 g de catalyseur frais; la durée de vie de ce système catalytique est directement liée à la vitesse spatiale retenue pour le traitement.

**Revendications**

1. Procédé de traitement d'une charge constituée d'une huile lourde ou d'une fraction d'huile lourde, contenant des asphaltènes, pour les convertir en fractions plus légères, caractérisé par les étapes suivantes:

a) on soumet la charge, mélangée à de l'hydrogène, à des conditions d'hydroviscoréduction,

b) on fait passer le produit de l'étape (a), mélangé à de l'hydrogène, dans des conditions d'hydrodémétallation, sur un catalyseur renfermant de l'alumine et au moins un métal de l'un au moins des groupes V, VI et VIII (groupe de fer), ledit catalyseur étant constitué d'agglomérats juxtaposés formés chacun d'une pluralité de plaquettes aciculaires, les plaquettes de chaque aggloméra étant orientées généralement radialement les unes par rapport aux autres et par rapport au centre de l'agglomérat, ledit catalyseur contenant une proportion majeure de mésopores en forme de coins, et présentant une surface spécifique comprise entre 50 et 250 $m^2/g$, un volume poreux total compris entre 0,7 et 2,0 $cm^3/g$ et la répartition poreuse suivante:

– % du volume poreux total en pores de diamètre moyen inférieur à 10 nanomètres: 0–10

– % du volume poreux total en pores de diamètre moyen compris entre 10 et 100 nanomètres: 40–90

– % du volume poreux total en pores de diamètre moyen compris entre 100 et 500 nanomètres: 5–60

– % du volume poreux total en pores de diamètre moyen compris entre 500 et 1000 nanomètres: 5–50

– % du volume poreux total en pores de diamètre moyen supérieur à 1000 nanomètres: 5–20.

c) on traite le produit de l'étape (b) par l'hydrogène au contact d'un catalyseur renfermant de l'alumine et au moins un métal ou composé de métal choisi dans le groupe qui comprend le molybdène, le tungstène, le nickel, le cobalt et le fer.

2. Procédé selon la revendication 1, dans lequel l'étape (c) est mise en œuvre d'abord au contact d'un catalyseur $C_1$, puis au contact d'un catalyseur $C_2$, chacun de ces catalyseurs renfermant de l'alumine, au moins un composé de molybdène et/ou tungstène et au moins un composé de nickel et/ou cobalt, le rapport pondéral des métaux

$$\frac{Ni + Co}{W + Mo}$$

étant de 0,8:1 à 3:1 pour le catalyseur $C_1$ et de 0,2:1 à 0,5:1 pour le catalyseur $C_2$, le rapport en poids du catalyseur $C_2$ au catalyseur $C_1$ étant de 1:1 à 9:1. L'un des métaux au numérateur ou au dénominateur pouvant être absent.

3. Procédé selon la revendication 1 ou 2, dans lequel les conditions d'hydroviscoréduction sont:

– pression: 40 à 200 bars

– température: 420 à 500 °C

– quantité d'hydrogène par rapport à la charge: 300 à 3 000 $Nm^3/m^3$

– temps de séjour: 10 s à 15 min.

4. Procédé selon l'une quelconque des revendications 1 à 3, dans lequel les agglomérats du catalyseur de l'étape (b) ont une taille moyenne généralement comprise entre 1 et 20 micromètres, les plaquettes aciculaires ayant une longueur moyenne généralement comprise entre 0,05 et 5 micromètres, un rapport de leur longueur moyenne à leur largeur moyenne généralement compris entre 2 et 20, un rapport de leur longueur moyenne à leur épaisseur moyenne généralement compris entre 1 et 5 000.

5. Procédé selon l'une quelconque des revendications 1 à 4, dans lequel le support du catalyseur de l'étape (b) est de l'alumine contenant de 100 à 1 000 ppm de silice.

6. Procédé selon l'une quelconque des revendications 1 à 5, dans lequel le catalyseur de l'étape (b) renferme de 0,5 à 40% en poids d'au moins un métal de l'un au moins des groupes V, VI et VIII (groupe de fer) exprimés en oxydes.

**Claims**

1. A process for converting a charge consisting of an asphaltene-containing heavy oil or heavy oil fraction to lighter fractions, characterized by the following steps of:

a) subjecting the charge, admixed with hydrogen, to hydrovisbreaking conditions;

b) passing the product from step (a), admixed with hydrogen, under hydrodemetallation conditions, over a catalyst containing alumina and at least one metal from at least one of groups V, VI and VIII (iron group), said catalyst consisting of juxtaposed conglomerates each formed of a plurality of acicular plates, the plates of each conglomerate being generally radially oriented with respect to one another and with respect to the center of the conglomerate, said catalyst having a major proportion of wedge-shaped mesopores and having a specific surface between 50 and 250 $m^2/g$, a total pore volume between 0.7 and 2.0 $cm^3/g$ and the following pore distribution:

– 0–10% of the total pore volume as pores of an average diameter lower than 10 nanometers,

– 40–90% of the total pore volume as pores of an average diameter between 10 and 100 nanometers,

– 5–60% of the total pore volume as pores of an average diameter between 100 and 500 nanometers,

– 5–50% of the total pore volume as pores of an average diameter between 500 and 1000 nanometers,

– 5–20% of the total pore volume as pores of an average diameter greater than 1000 nanometers.

c) treating the product from step (b) with hydrogen in contact with a catalyst containing alumina and at least one metal or compound of a metal selected from the group comprising molybdenum, tungsten, nickel, cobalt and iron.

2. A process according to claim 1, wherein step (c) is conducted first in contact with a catalyst $C_1$ then in contact with a catalyst $C_2$, each of these

catalysts containing alumina, at least one molybdenum and/or tungsten compound and at least one nickel and/or cobalt compound, the ratio by weight of the metals

$$\frac{Ni+Co}{W+Mo}$$

being from 0.8:1 to 3:1 for catalyst $C_1$ and from 0.2:1 to 0.5:1 for catalyst $C_2$, the ratio by weight of catalyst $C_2$ to catalyst $C_1$ being from 1:1 to 9:1, one of the metals at the numerator or at the denominator being optionally omitted.

3. A process according to claim 1 or 2, wherein the hydrovisbreaking conditions are:

– pressure: 40 to 200 bars

– temperature: 420 to 500 °C

– hydrogen amount in proportion to the charge: 300 to 3000 $Nm^3/m^3$,

– residence time: 10 seconds to 15 minutes.

4. A process according to any of claims 1 to 3, wherein the catalyst conglomerates of step (b) have an average size generally from 1 to 20 micrometers, the acicular plates having an average length generally from 0.05 to 5 micrometers, a ratio of their average length to their average width generally from 2 to 20 and a ratio of their average length to their average thickness generally from 1 to 5000.

5. A process according to any of claims 1 to 4 wherein the catalyst carrier of step (b) is alumina containing from 100 to 1000 ppm of silica.

6. A process according to any of claims 1 to 5, wherein the catalyst of step (b) contains from 0.5 to 40% by weight of at least one metal from at least one of groups V, VI and VIII (iron group) expressed as oxides.

**Patentansprüche**

1. Verfahren zur Behandlung einer Charge bestehend aus einem Schweröl oder einer Schwerölfraktion, welche Asphaltene enthalten, zur Umwandlung in leichtere Fraktionen, gekennzeichnet durch die folgenden Stufen:

a) man setzt die Charge, im Gemisch mit Wasserstoff, Bedingungen der Hydroviscoreduktion aus,

b) man lässt das Produkt aus der Stufe (a), vermischt mit Wasserstoff, unter Bedingungen der Hydrodemetallisierung auf einen Katalysator strömen, welcher Aluminiumoxid und wenigstens ein Metall wenigstens einer der Gruppen V, VI und VIII (Eisengruppe) enthält, wobei dieser Katalysator gebildet wird durch nebeneinander angeordnete Agglomerate, die je aus einer Vielzahl von nadelförmigen Blättchen gebildet sind, wobei die Blättchen jedes Agglomerat im wesentlichen radial bezüglich einander und bezüglich dem Mittelpunkt des Agglomerats orientiert sind und der Katalysator einen grösseren Anteil an keilförmigen Mesoporen enthält und eine spezifische Oberfläche zwischen 50 und 250 $m^2/g$, ein Porengesamtvolumen zwischen 0,7 und 2,0 $cm^3/g$ sowie die folgende Porenverteilung enthält:

– % des Porengesamtvolumens an Poren mit einem mittleren Durchmesser von weniger als 10 Nanometer: 0–10

– % des Porengesamtvolumens an Poren mit einem mittleren Durchmesser zwischen 10 und 100 Nanometer: 40–90

– % des Porengesamtvolumens an Poren von einem mittleren Durchmesser zwischen 100 und 500 Nanometer: 5–60

– % des Porengesamtvolumens an Poren von einem mittleren Durchmesser zwischen 500 und 1000 Nanometer: 5–50

– % des Porengesamtvolumens an Poren mit einem mittleren Durchmesser grösser als 1000 Nanometer: 5–20

c) man behandelt das Produkt der Stufe (b) mit Wasserstoff in Kontakt mit einem Katalysator, der Aluminiumoxid und wenigstens ein Metall oder eine Metallverbindung enthält, die gewählt ist aus der Molybdän, Wolfram, Kobalt und Eisen enthaltenden Gruppe.

2. Verfahren nach Anspruch 1, dadurch gekennzeichnet, dass die Stufe (c) zunächst in Kontakt mit einem Katalysator $C_1$, dann in Kontakt mit einem Katalysator $C_2$ durchgeführt wird, wobei jeder dieser Katalysatoren Aluminiumoxid, wenigstens eine Molybdän- und/oder Wolframverbindung und wenigstens eine Nickel- und/oder Kobaltverbindung enthält, wobei das Gewichtsverhältnis der Metalle

$$\frac{Ni+Co}{W+Mo}$$

0,8:1 bis 3:1 für den Katalysator $C_1$ und 0,2:1 bis 0,5:1 für den Katalysator $C_2$ beträgt und das Gewichtsverhältnis des Katalysators $C_2$ zum Katalysator $C_1$ bei 1:1 bis 9:1 liegt und wobei eines der Metalle im Zähler oder im Nenner fehlen kann.

3. Verfahren nach einem der Ansprüche 1 oder 2, dadurch gekennzeichnet, dass die Bedingungen der Hydroviscoreduktion sind:

– Druck: 40 bis 200 bar

– Temperatur: 420 bis 500 °C

– Menge an Wasserstoff bezogen auf die Charge: 300 bis 3 000 $Nm^3/m^3$

– Verweilzeit: 10 Sekunden bis 15 Minuten.

4. Verfahren nach einem der Ansprüche 1 bis 3, dadurch gekennzeichnet, dass die Agglomerate des Katalysators der Stufe (b) eine mittlere Abmessung im allgemeinen zwischen 1 und 20 Mikrometer, die nadelförmigen Plättchen eine mittlere Länge im allgemeinen zwischen 0,05 und 5 Mikrometer, ein Verhältnis ihrer mittleren Länge zu ihrer mittleren Breite im allgemeinen zwischen 2 bis 20, ein Verhältnis ihrer mittleren Länge zu ihrer mittleren Dicke im allgemeinen zwischen 1 und 5 000, haben.

5. Verfahren nach einem der Ansprüche 1 bis 4, dadurch gekennzeichnet, dass der Träger des Katalysators der Stufe (b) Aluminiumoxid ist, welches 100 bis 1 000 ppm Siliziumdioxid enthält.

6. Verfahren nach einem der Ansprüche 1 bis 5, dadurch gekennzeichnet, dass der Katalysator der Stufe (b) 0,5 bis 40 Gew.-% wenigstens eines Metalls wenigstens einer der Gruppen V, VI und VIII (Eisengruppe), ausgedrückt als Oxide, enthält.

FIG.1

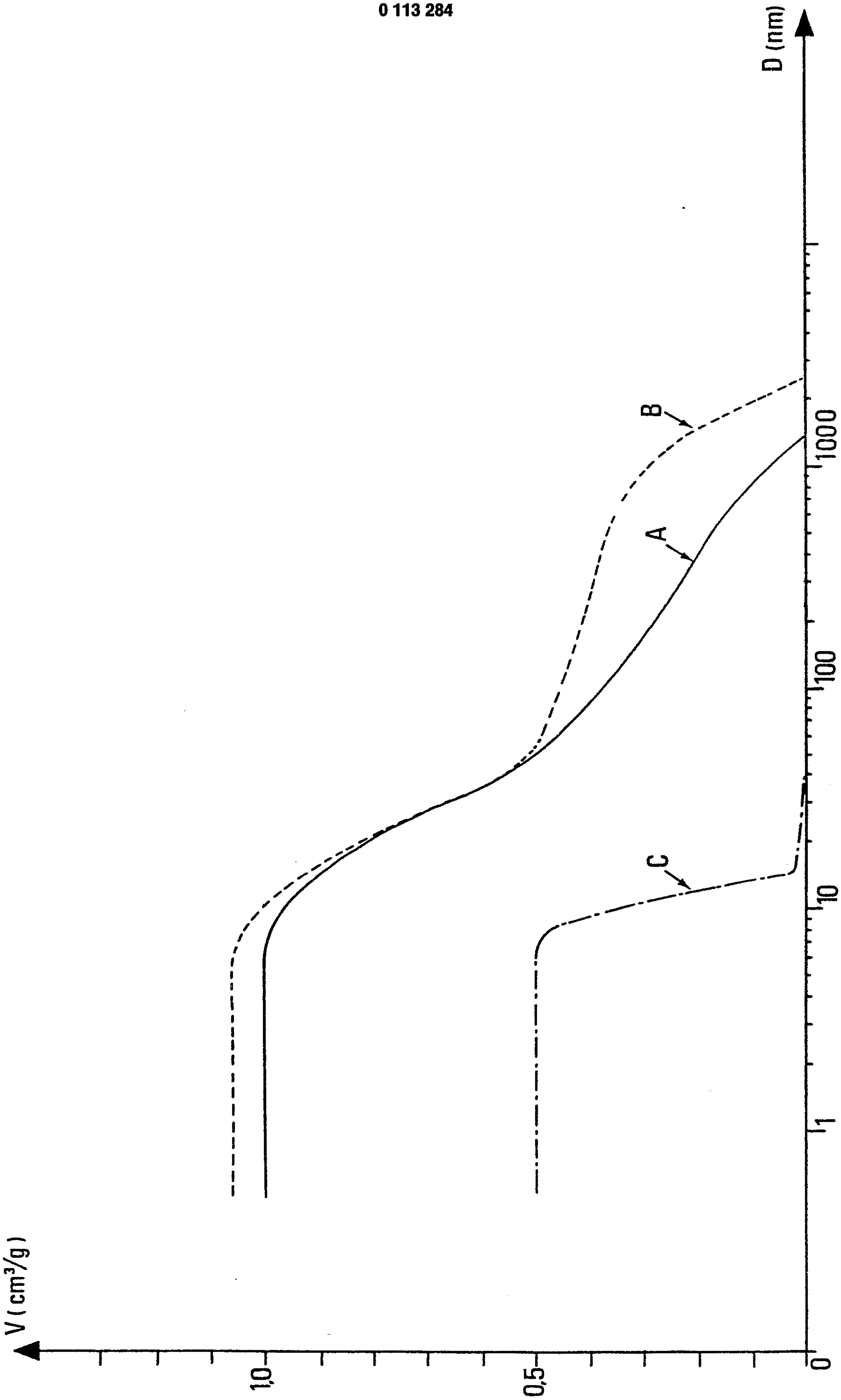

FIG.2
1cm = 33 μm

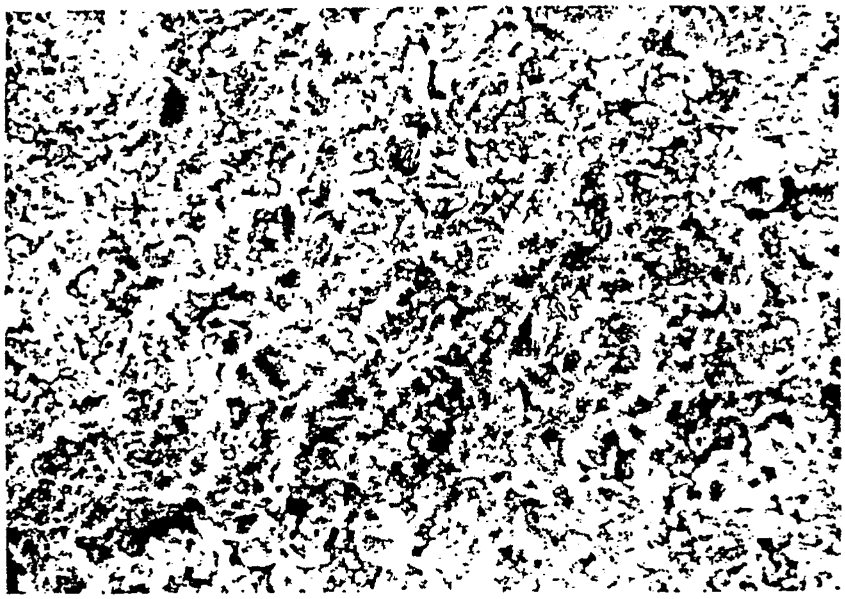

FIG.3
1cm = 3,3μm

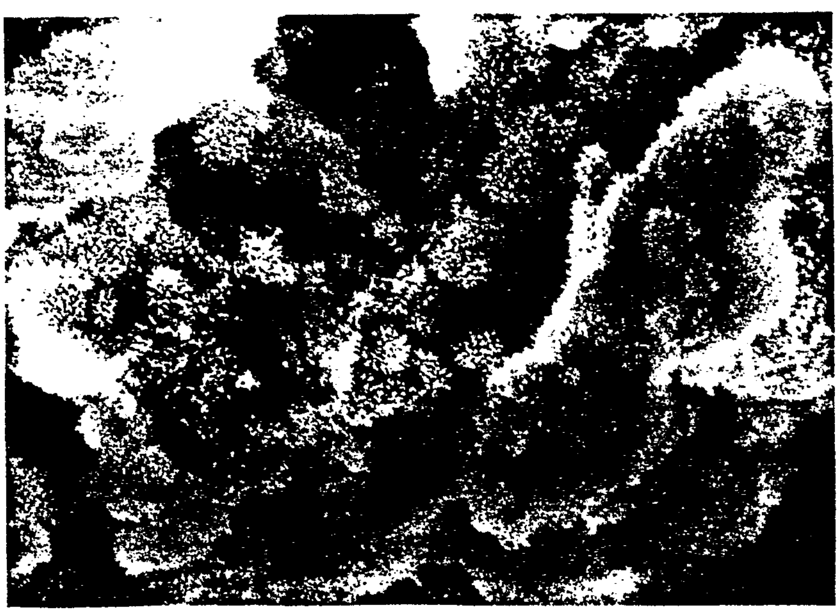

FIG.4
1cm=1 μm

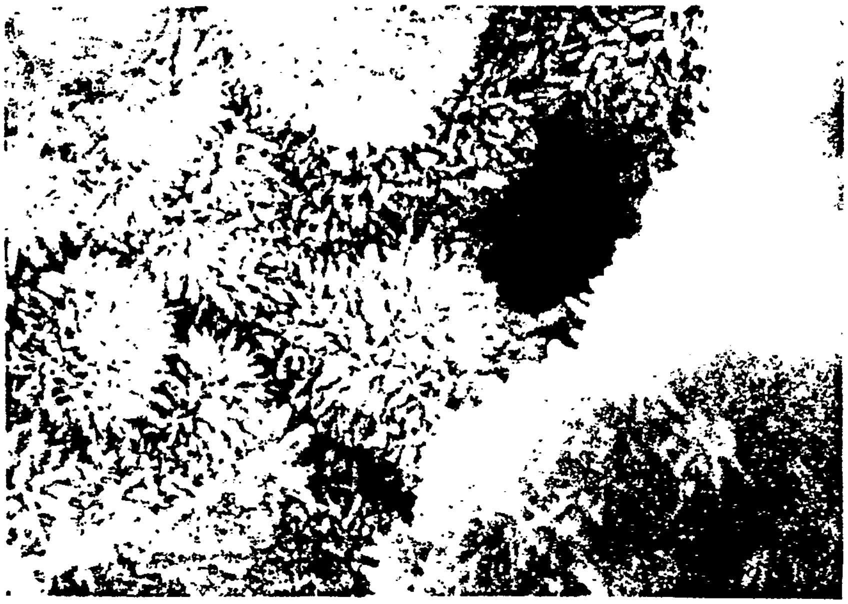

FIG.5
1cm=0,5 μm

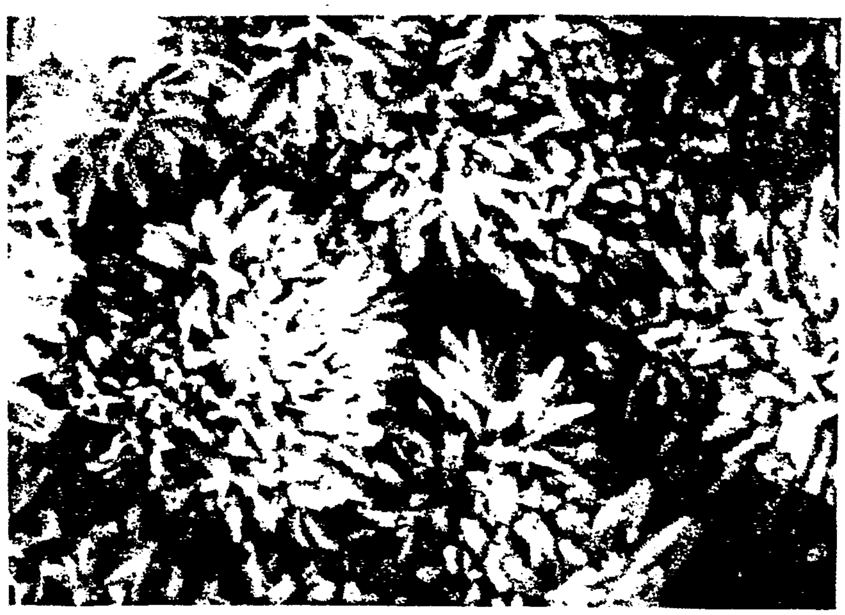

**FIG.6**

1mm = 9 nanomètres

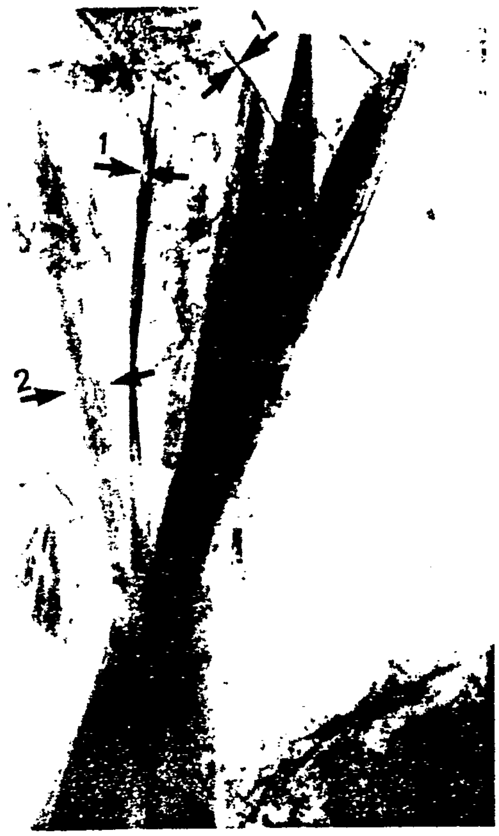

FIG.7

1cm=33 µm

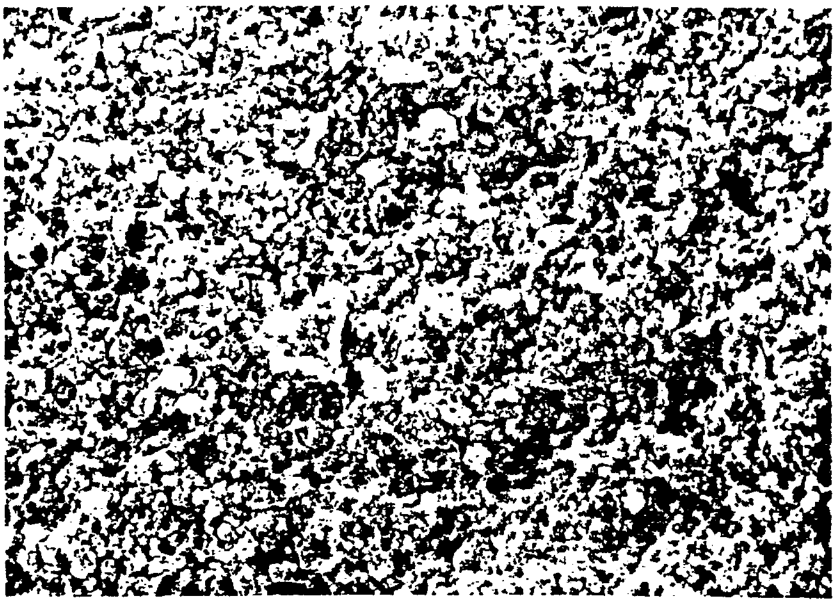

FIG.8

1cm= 3,3 µm

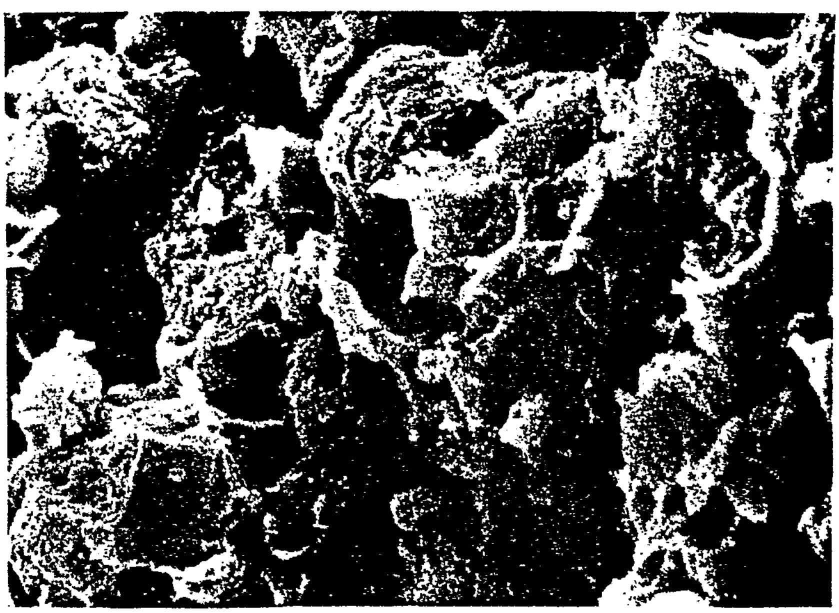

FIG.9
1cm = 1μm

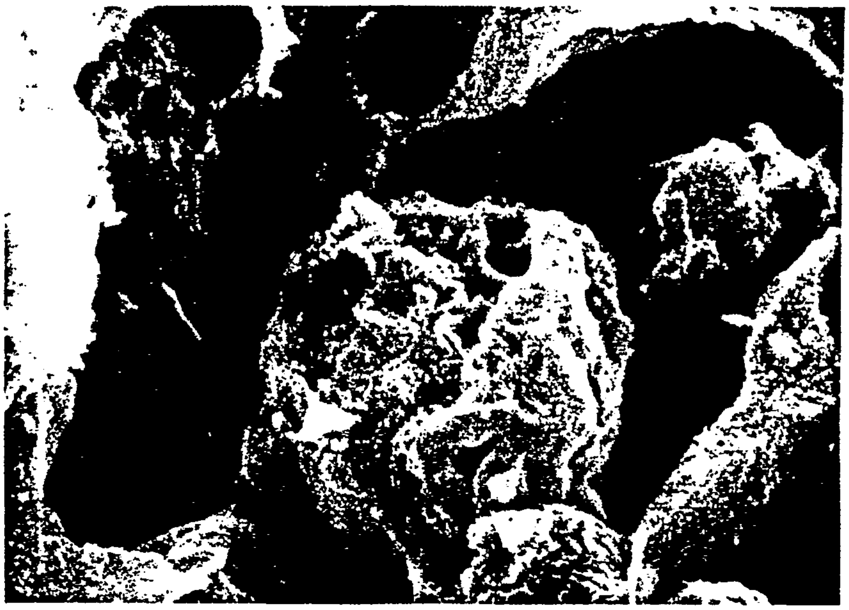

FIG.10
1cm = 0,5 μm

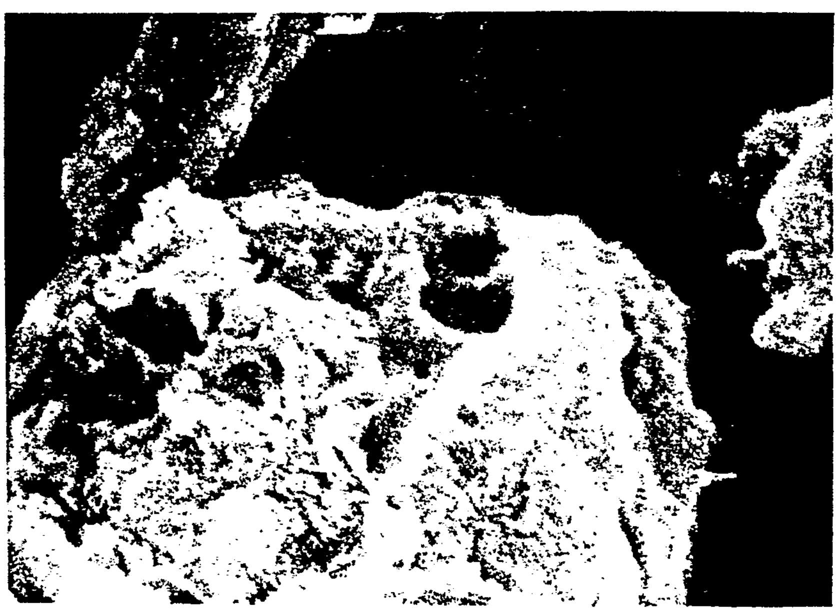

FIG.11